# EUROPÄISCHE PATENTSCHRIFT

(11) **EP 0 672 552 B1**
(45) Veröffentlichungstag und Bekanntmachung des Hinweises auf die Patenterteilung: **10.09.1997**
(21) Anmeldenummer: 95103100.4
(22) Anmeldetag: 04.03.1995
(51) Int. Cl.: B60H 3/06

(54) **Lufttrocknungsanlage für Kraftfahrzeuge**
Air drying installation for motor cars
Installation de séchage d'air pour véhicules à moteur

(30) Priorität: 15.03.1994 DE 4408796
(43) Veröffentlichungstag der Anmeldung: 20.09.1995
(73) Patentinhaber: Behr GmbH & Co., D-70469 Stuttgart (DE)
(72) Erfinder: Khelifa, Noureddine, Dr., D-70180 Stuttgart (DE)
(74) Vertreter: Wasmuth, Rolf, Dipl.-Ing.

(56) Entgegenhaltungen:
- DE-A- 2 050 898
- DE-A- 2 347 335
- US-A- 4 793 143
- US-A- 5 170 633

## Beschreibung

Die Erfindung betrifft eine Vorrichtung zur Senkung der Luftfeuchtigkeit in einem Fahrgastraum eines Kraftfahrzeuges, insbesondere eines abwärmearmen Kraftfahrzeuges, nach dem Oberbegriff des Anspruchs 1.

Eine derartige Vorrichtung ist aus der DE-A 20 50 898 bekannt. Das Wandelement ist durch ein flexibles Band, nämlich einem mit Lithiumchlorit getränkten Textilband gebildet. Über einen Antrieb wird das Band umlaufend bewegt, so daß fortlaufend ein regenerierter Bandabschnitt vom zu trocknenden Luftstrom durchströmt ist. Die Regeneration erfolgt durch Vorbeiführen des Bandes an einer Heizeinrichtung. Problematisch ist die Aggressivität der Salzlösungen gegenüber Metallen, was zu Korrosion führt. Auch muß aufgrund einer möglichen Instabilität durch Auskristallisieren des Salzes eine Steuerung der Desorptionstemperatur oder eine ständige Kontrolle der Lösungskonzentration erfolgen, wobei eine zur Desorption vorgesehene Heizeinrichtung äußerst leistungsstark sein muß, um eine ausreichende Regeneration des rasch umlaufenden Bandes zu gewährleisten. Dennoch ist eine vollständige Trocknung der Luft praktisch nicht möglich.

Der Erfindung liegt die Aufgabe zugrunde, eine Vorrichtung der gattungsgemäßen Art derart weiterzubilden, daß bei hoher Standfestigkeit eine leistungsfähige Lufttrocknung und ein größerer Temperaturbereich für die Desorption möglich ist.

Die Aufgabe ist nach den kennzeichnenden Merkmalen des Anspruchs 1 gelöst.

Die Anordnung eines zweiten Wandelementes als Zwischenwand zwischen der Lufthauptkammer und einer zweiten Luftnebenkammer schafft einen zweiten Trocknungspfad, so daß über die Luftstromsteuerelemente zunächst der eine Trocknungspfad und - sobald die Leistungsfähigkeit des Wandelementes erschöpft ist - der zweite Trocknungspfad nach Bedarf in den zu trocknenden Luftstrom einschaltbar ist. Wird ein Trocknungspfad genutzt, erfolgt gleichzeitig die Desorption des Wandelementes im zweiten Trocknungspfad durch einen anderen Luftstrom, der von dem der Vorrichtung zugeführten Abluftstrom abgezweigt sein kann.

In Weiterbildung der Erfindung ist in jeder Luftkammer eine zum Wandelement etwa parallele Klappe als Luftstromsteuerelement angeordnet, wobei die Klappe in einer ersten Stellung wie in einer zweiten Stellung in einer etwa diagonalen Ebene liegt, in der die Luftkammer jeweils in einen Lufteinlaß und in einen Luftauslaß aufgeteilt ist. Das die Lufthauptkammer und die Luftnebenkammer jeweils begrenzende Wandelement liegt somit zwischen einem Lufteinlaß und einem Luftauslaß, also über seine volle Länge im Strömungspfad eines durch den Lufteinlaß zum Luftauslaß geführten Luftstroms. Die Anordnung der Klappen in den Luftkammern gewährleistet ein einfaches Umschalten von dem einen Trocknungspfad auf den anderen Trocknungspfad, wobei das in jeweils nicht genutzten Trocknungspfad liegende Wandelement durch einen insbesondere aufgeheizten Teilluftstrom gleichzeitig desorbiert wird.

Bevorzugt sind die Lufteinlässe gemeinsam an den Abluftkanal angeschlossen, insbesondere über einen Diffusor. So wird der Abluftstrom in einen zu trocknenden Teilluftstrom und einen den Desorptionsluftstrom bildenden Teilluftstrom aufgeteilt. Dabei kann durch die konstruktive Gestaltung der Größe der jeweiligen Lufteinlässe das Verhältnis der Aufteilung des Abluftstroms festgelegt werden. So wird bei einer größer ausgebildeten Hauptkammer und entsprechend gestaltetem Diffusor ein größerer Teilluftstrom als Desorptionsluftstrom genutzt werden.

In Weiterbildung der Erfindung ist das feuchtigkeitsbindende Material ein Sorbens, insbesondere ein Zeolith, Silicagel, Aluminiumhydroxyd oder dgl. Dabei ist das Wandelement als luftdurchlässiger Käfig ausgebildet, in den das Sorbens als Schüttung angebracht ist. Die Korngröße der Schüttung beträgt durchschnittlich etwa 3mm.

Um durch Setzung der Schüttung mögliche Leckageströme durch das Wandelement zu vermeiden, ist vorgesehen, das Wandelement mit einer Schüttungsmaterial enthaltenden Vorratskammer zu verbinden, aus der - unter Wirkung der Gravitationskraft - Sorbensmaterial in den Käfig des Wandelementes nachrutscht. Durch Rütteln oder Abrieb bedingte Volumenänderungen können so nicht zu Leerstellen im Wandelement führen, so daß Leckageströme vermieden sind.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: eine perspektivische Ansicht einer erfindungsgemäßen Vorrichtung zur Luftentfeuchtung,
- Fig. 2: eine Draufsicht auf die Vorrichtung nach Fig. 1,
- Fig. 3: eine perspektivische Ansicht einer weiteren Vorrichtung in einer ersten Stellung der Luftstromsteuerlemente,
- Fig. 4: eine perspektivische Darstellung der Vorrichtung nach Fig. 3 in einer zweiten Stellung der Luftstromsteuerelemente,
- Fig. 5: in schematischer Darstellung einen Deckel für das Gehäuse der Vorrichtung nach Fig. 3,
- Fig. 6: eine Vorrichtung entsprechend der Vorrichtung nach Fig. 1 mit einem Wärmetauscher als Heizung,
- Fig. 7: ein anderes Ausführungsbeispiel der Vorrichtung mit quer zu einer Hauptströmungsrichtung liegenden Wandelementen,
- Fig. 8: eine schematische Darstellung der Vorrichtung nach Fig. 7,
- Fig. 9: ein weiteres Ausführungsbeispiel der Vorrichtung.

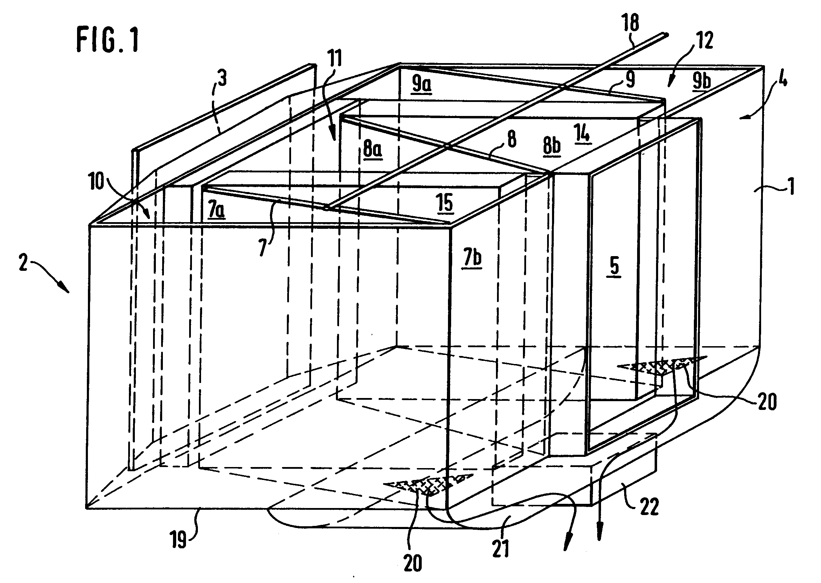

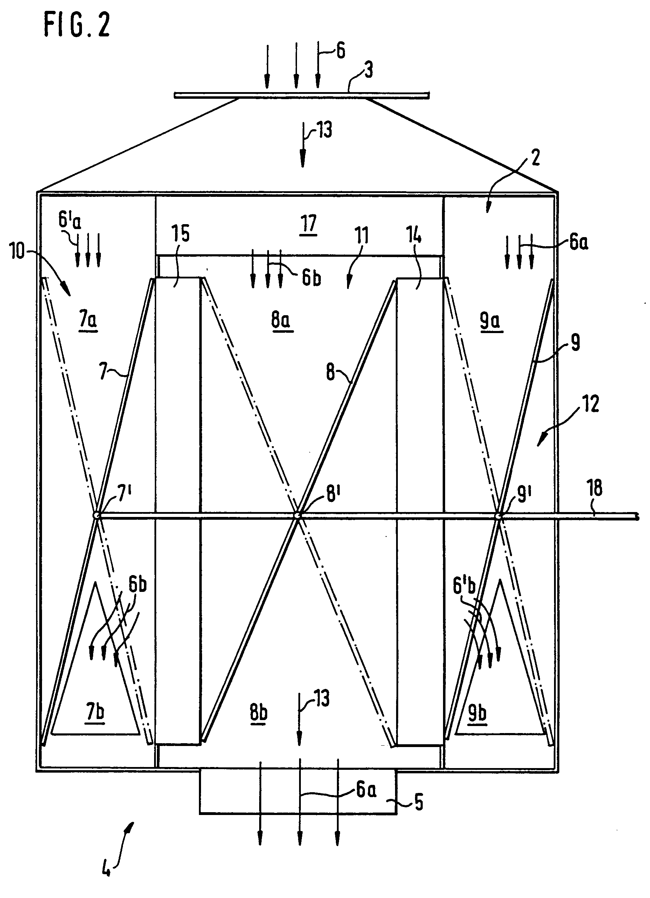

Die in den Fig. 1 und 2 dargestellte Vorrichtung zur Entfeuchtung der einem Fahrgastraum eines Kraftfahrzeuges zugeführten Luft besteht aus einem Gehäuse 1, welches auf einer Stirnseite 2 eine Öffnung 3 zum Anschluß eines Abluftkanals aufweist, der aus einem Fahrgastraum feuchte Luft zuführt. Auf der der Stirnseite 2 gegenüberliegenden Stirnseite 4 ist ein Anschlußstutzen 5 ausgebildet, welcher mit einem Zuluftkanal verbunden ist, der den getrockneten Luftstrom in den Fahrgastraum leitet.

Im Gehäuse 1 sind drei Luftkammern 10, 11, 12 ausgebildet, welche - wie die Fig. 1 und 2 zeigen - quer zur Hauptströmungsrichtung 13 nebeneinander liegen. Die äußeren Luftkammern 10 und 12 bilden Luftnebenkammern, zwischen denen die Lufthauptkammer 11 liegt. Die Lufthauptkammer ist von den Luftnebenkammern durch Wandelemente 14, 15 getrennt; die Wandelemente 14, 15 bestehen aus feuchtigkeitsbindendem Material, insbesondere aus einem Sorbens, wie Zeolith, Silicagel oder Aluminiumhydroxyd. Die Wandelemente 14, 15 erstrecken sich im wesentlichen parallel zur Hauptströmungsrichtung 13 über im wesentlichen die Gesamtlänge der Luftkammern 10, 11 und 12.

In jeder Luftkammer 10, 11 und 12 ist je ein Luftstromsteuerelement angeordnet, welches bevorzugt als im wesentlichen parallel zum Wandelement 14, 15 liegende Klappe 7, 8, 9 ausgebildet ist. Jede Klappe 7, 8, 9 ist um eine Achse 7', 8', 9' schwenkbar, die parallel zum Wandelement 14 bzw. 15 liegt und durch die Schnittgerade der die Luftkammern kreuzenden Diagnonalflächen bestimmt ist. In der Draufsicht nach Fig. 2 liegen die Achsen 7', 8', 9' somit genau im Kammermittelpunkt.

Jede in einer Luftkammer 10, 11, 12 liegende Klappe 7, 8, 9 teilt die Kammer diagonal auf, wodurch der Stirnseite 2 zugewandte Lufteinlässe 7a, 8a und 9a sowie der Stirnseite 4 zugewandte Luftauslässe 7b, 8b und 9b gebildet sind.

Die aus dem Fahrgastraum (nicht dargestellt) über einen Abluftkanal abgezogene Abluft strömt in Pfeilrichtung 13 in einen den Lufteinlässen 7a, 8a und 9a vorgeschalteten Diffusor 16, durch den die Luft auf die Lufteinlässe verteilt wird. Die Aufteilung erfolgt dabei etwa so, daß für die Desorption etwa die Hälfte der Luftmenge im Vergleich zur bei der Adsorption durchströmenden Luftmenge benutzt wird. Zur Realisierung wird der Heizkörper und/oder der Ausschnitt des Fortluftstutzens entsprechend ausgebildet. In der in den Fig. 1 und 2 dargestellten Lage der Klappen 7, 8, 9 (durchgezogene Linie) wird der in den Lufteinlaß 9a der Luftnebenkammer 12 eintretende Teilluftstrom 6a von der Klappe 9 in Richtung zum Wandelement 14 geleitet, durchströmt das Wandelement 14 und tritt in den Luftauslaß 8b der Lufthauptkammer 11 über. Aus dem Luftauslaß 8b strömt der getrocknete Teilluftstrom 6a in den Anschlußstutzen 5 und wird über den Zuluftkanal dem Fahrgastraum - ggf. unter Beimengung von Frischluft und/oder Umluft - wieder zugeführt.

Ein zweiter Teilluftstrom 6b tritt in den Lufteinlaß 8a der Hauptkammer 11 ein, wobei er zunächst eine Heizung 17 durchströmt, die dem Lufteinlaß 8a der Lufthauptkammer 11 vorgeschaltet ist. Die Heizung kann aus einem von der Abwärme eines Antriebsmotors, z. B. eines Verbrennungsmotors gespeister Wärmetauscher sein; bevorzugt ist die Heizung eine elektrische Widerstandsheizung aus insbesondere PTC-Elementen.

Der aufgeheizte Teilluftstrom 6b wird von der Luftklappe 8 zum Wandelement 15 geleitet, durchströmt das Wandelement 15 und nimmt dabei die im Sorbens des Wandelementes 15 adsorbierte Luftfeuchtigkeit auf. Der feuchte Luftstrom 6b tritt in den Luftauslaß 7b der Luftnebenkammer 10 ein und wird über eine bevorzugt im Boden der Luftkammer vorgesehene Fortluftöffnung 20 in einem unterhalb des Gehäuses 1 ausgebildeten Fortluftsammler 21 aufgenommen und über einen Fortluftstutzen 22 abgeführt. In den Sammler 21 mündet sowohl die Fortluftöffnung 20 der ersten Luftnebenkammer 10 als auch die Fortluftöffnung 20 der zweiten Luftnebenkammer 12.

Der Lufteinlaß 7a der Luftnebenkamer 10 endet in der dargestellten Stellung der Klappe 7 blind; in gleicher Weise ist der Luftauslaß 9b der Luftnebenkammer 12 blind geschaltet.

Die Klappen 7, 8 und 9 sind bevorzugt von einem gemeinsamen Klappenantrieb 18 betätigt, wodurch die Luftstromsteuerelemente (Klappen 7, 8, 9) miteinander stellungsabhängig gekoppelt sind. Über den Klappenantrieb 18 werden die Klappen 7, 8 und 9 in die in Fig. 2 strichlierte Stellung verstellt, in der nunmehr der Lufteinlaß 7a einen Teilluftstrom 6'a durch das regenerierte Sorbens des Wandelementes 15 leitet, um diesen dann über den Luftauslaß 8b der Lufthauptkammer als trockenen Luftstrom dem Fahrgastraum zuzuführen. Der weiterhin in den Lufteinlaß 8a der Lufthauptkammer 11 eintretende, aufgeheizte Teilluftstrom 6b durchströmt das Wandelement 14 als Desorptionsluftstrom. Die im Sorbens adsorbierte Feuchtigkeit wird ausgetrieben und vom Luftstrom 6'b abgeführt. Der Luftstrom 6'b tritt über die Fortluftöffnung 20 im Boden des Gehäuses 1 in den Fortluftsammler 21 ein und wird über den Fortluftstutzen 22 nach außen abgeführt.

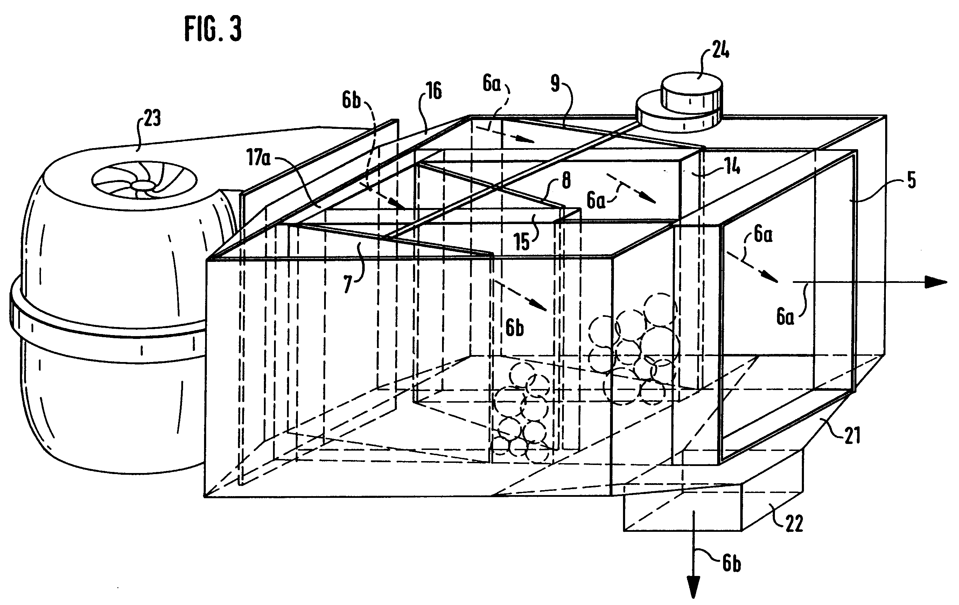

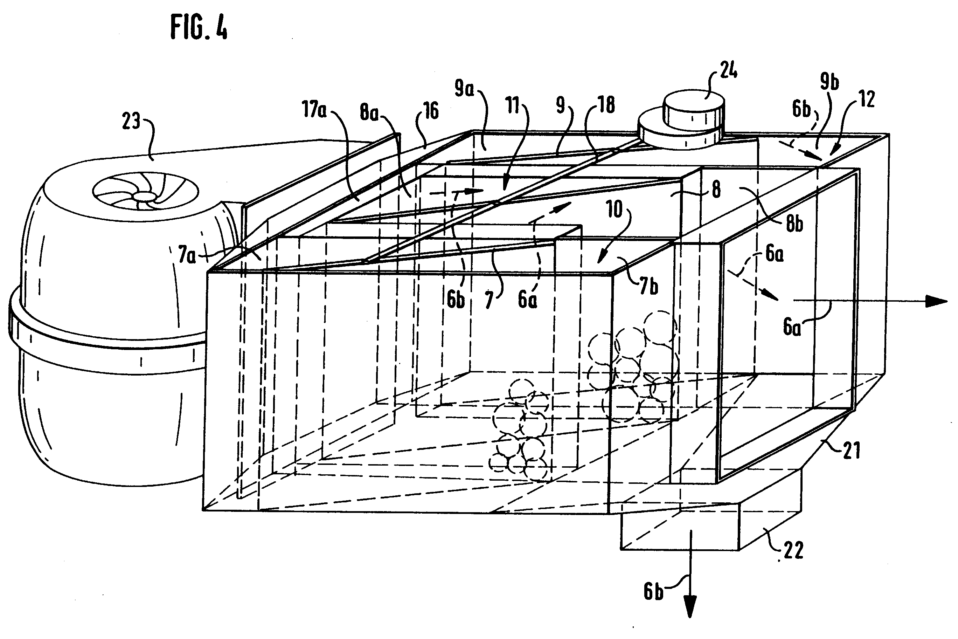

Wie insbesondere in den Fig. 3 und 4 gezeigt, besteht jedes Wandelement 14, 15 aus einem luftdurchlässigen Käfig, der aus einer dünnmaschigen Drahtmatte oder gelochtem Blech bestehen kann. In diesen Käfig wird das Sorbens als Schüttung eingebracht, wobei die Wandstärke des Wandelementes bestimmende Dicke der Schüttung etwa 2cm beträgt und die Korngröße im Schnitt 3mm. Eine derartige Schüttung gewährleistet geringe Druckverluste unter 3 mbar bei einer Luftgeschwindigkeit bei etwa 1 m/s. Jedes Wandelement umfaßt etwa 450g Sorbens, wodurch eine Betriebsdauer pro Zyklus von ca. 10min erzielbar ist.

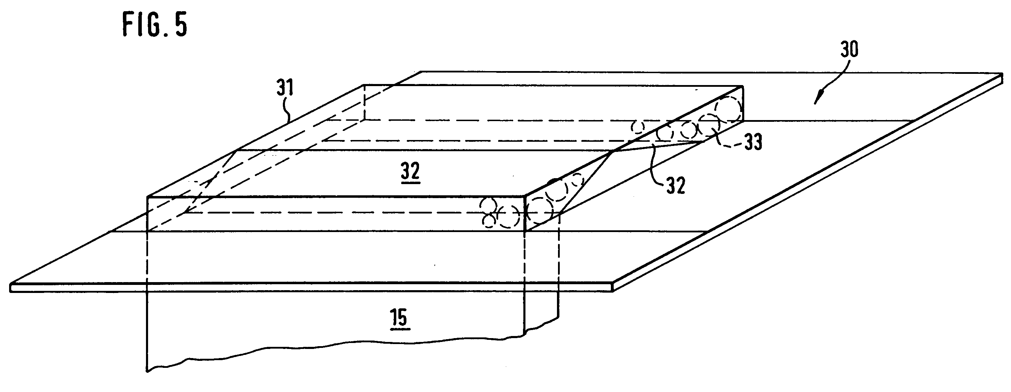

Die Vorrichtung ist so angeordnet, daß die Schwerkraft in der Ebene der Wandelemente 14, 15 in Richtung auf den Boden 19 des Gehäuses wirkt. Das Gehäuse selbst ist dabei von einem Deckel 30 verschlossen, wie er in Fig. 5 für ein Gehäuse nach Fig. 3 gezeigt ist. Der Deckel ist im Bereich oberhalb der Wandelemente 14, 15 geöffnet ist. Im Deckel 30 ist eine Vorratskammer 31, welche einen zur Oberkante der Wandelemente 14, 15 fallenden Boden 32 zeigt. Eine in die Vorratskammer 31 eingefüllte Schüttung 33 wird somit aufgrund der Schwerkraft in den Käfig des jeweiligen Wandelementes 14, 15 gefördert. Dadurch ist sichergestellt, daß eine durch Erschütterungen und Abrieb auftretende Setzung der Schüttung ausgeglichen wird. Ein das Wandelement 14, 15 umgehender Leckagestrom des zu behandelnden Luftstroms ist so weitgehend ausgeschlossen.

In der in den Fig. 3 und 4 gezeigten Vorrichtung sind die Luftkammer 10 und 12 abströmseitig über das Ende der Luftkammer 11 hinaus verlängert und über einen Sammler 21 miteinander verbunden. An den Sammler 21 ist in bekannter Weise ein Fortluftstutzen 22 zum Abführen der feuchtigkeitsbeladenen Desorptionsluft angeschlossen.

Bevorzugt ist der Diffusor 16 an ein Gebläse 23 angeschlossen, welches aus dem Fahrgastraum Abluft abzieht.

Der Klappenantrieb 18 ist von einem Motor 24 gesteuert, der entweder zeitgesteuert ein Umschalten der Klappen von der ersten Stellung in die zweite Stellung bewirkt oder das Umschalten in Abhängigkeit vom Trocknungsgrad des Trocknungsluftstroms vornimmt. Im Ausführungsbeispiel nach den Fig. 3 und 4 ist als Heizung eine elektrische Widerstandsheizung 17a vorgesehen, welche bevorzugt aus PTC-Elementen besteht.

In der in Fig. 3 gezeigten ersten Stellung der Klappen 7, 8, 9 strömt der eine Teilluftstrom 6a durch das Wandelement 14 und tritt als getrockneter Teilluftstrom 6a am Anschlußstutzen 5 aus. Der von der Widerstandsheizung 17a aufgeheizte Teilluftstrom 6b tritt in den Lufteinlaß 8a der Lufthauptkammer 11 ein, durchströmt das Wandelement 15 und desorbiert das Sorbens; der feuchtigkeitsbeladene Teilluftstrom 6b wird über den Sammler 21 und den Fortluftstutzen 22 abgeführt.

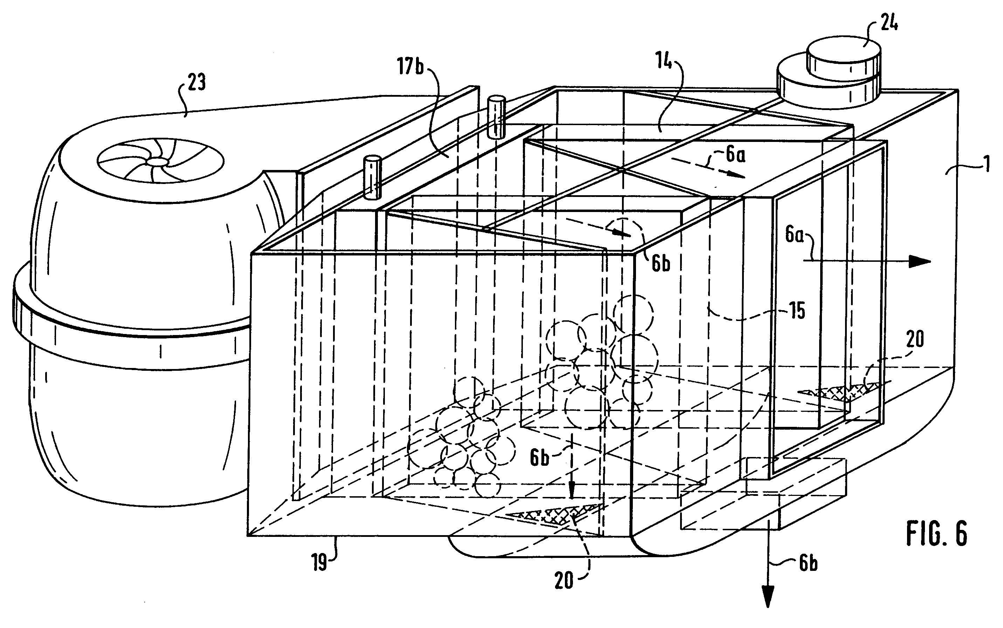

Im Ausführungsbeispiel nach Fig. 6 ist als Heizung ein Wärmetauscher 17b vorgesehen. Ansonsten entspricht der Aufbau der Vorrichtung nach Fig. 6 der nach Fig. 1, weshalb für gleiche Teile gleiche Bezugszeichen verwendet sind. Ergänzend ist anzumerken, daß die Fortluftöffnungen 20 im Boden 19 des Gehäuses 1 bzw. der Luftnebenkammern derart angeordnet und ausgebildet sind, daß in der jeweiligen Klappenstellung der Luftaustritt 7b bzw. 9b mit ihr verbunden ist; dabei ist dafür Sorge zu tragen, daß die Fortluftöffnung 20 in keiner Stellung der Klappe 7 und 9 deckungsgleich mit dem Lufteintritt 7a bzw. 9a liegen kann. Bevorzugt ist die Form der Fortluftöffnung 20 dreieckig.

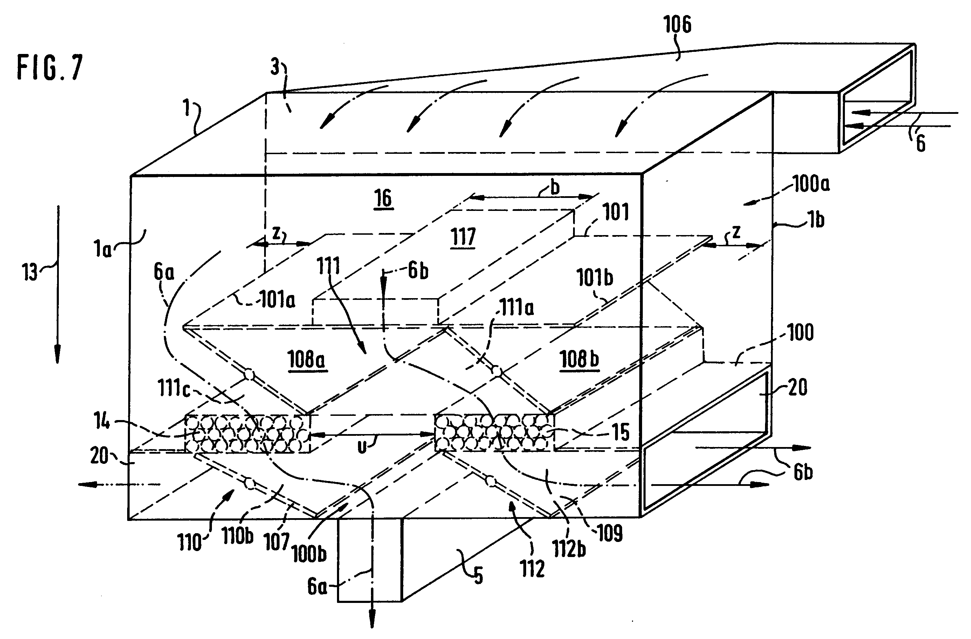

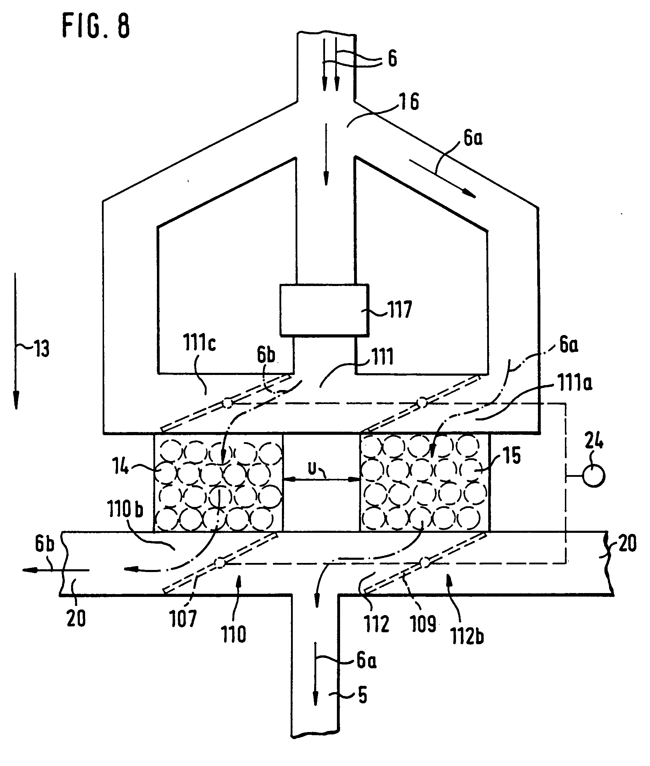

In den Fig. 7 und 8 ist ein Ausführungsbeispiel der erfindungsgemäßen Vorrichtung gezeigt, bei der die Wandelemente 14 und 15 etwa in einer Ebene quer zur Hauptströmungsrichtung 13 des Luftstroms 6 liegen. Diese Ebene ist von einer Gehäusetrennwand 100 gebildet, welche das Gehäuse 1 in einen oberen Luftraum 100a und einen unteren Luftraum 100b aufteilt. Die Gehäusetrennwand 100 trägt die Wandelemente 14, 15, welche bevorzugt von der einen Stirnseite 1a des Gehäuses 1 bis zur anderen Stirnseite 1b des Gehäuses verlaufen. Die beiden Wandelemente liegen im Ausführungsbeispiel nach Fig. 7 und 8 mit einem Abstand u voneinander, der insbesondere durch die Breite b der Heizung bestimmt ist, die im gezeigten Ausführungsbeispiel ein Wärmetauscher 117 ist. Der Wärmetauscher ist insbesondere an einen Kühlmittelkreislauf eines Motors, vorzugsweise eines Verbrennungsmotors, angeschlossen.

Die beiden Lufträume 100a und 100b sind über die Wandelemente 14 und 15 miteinander verbunden.

Im unteren Luftraum 100b sind die Luftnebenkammern 110 und 112 angeordnet, welche - in Hauptströmungsrichtung 13 gesehen - deckungsgleich unterhalb eines Wandelementes 14 bzw. 15 liegen. In den Luftnebenkammern 110, 112 sind diagonal liegende Klappen 107, 109 als Luftstromsteuerelemente angeordnet, welche einen von der Klappe 107, 109 und den Wandelementen 14, 15 begrenzten Luftauslaß 110b, 112b entweder mit einer Fortluftöffnung 20 oder über einen Anschlußstutzen 5 mit dem Zuluftkanal eines Fahrgastraums verbindet. Die Luftnebenkammern 110, 112 und die Klappen 107, 109 erstrecken sich ebenso wie die Wandelemente, 14, 15 von der einen Stirnseite 1a bis zur anderen Stirnseite 1b des Gehäuses 1.

In der in Fig. 7 gezeigten Stellung der Luftstromsteuerelemente bzw. Klappen 107, 109 ist der Luftauslaß 110b mit dem Raum zwischen den Klappen verbunden, der über den Anschlußstutzen 5 mit dem Zuluftkanal in Verbindung steht. Der Luftauslaß 112b ist mit einer seitlichen Fortluftöffnung 20 des Gehäuses 1 verbunden. In der Fig. 8 gezeigten Stellung der Klappen 107, 109 ist der Luftauslaß 110b der zweiten Luftnebenkammer 110 mit der seitlichen Fortluftöffnung 20 des Gehäuses 1 verbunden, während der Luftauslaß 112b der ersten Luftnebenkammer 112 mit dem durch die Trennwand 100, die Klappe 109 und das Gehäuse 1 begrenzten Luftraum verbunden ist, der über den Anschlußstutzen 5 mit dem Zuluftkanal in Verbindung steht.

Auf der den Luftnebenkammern 110, 112 abgewandten Seite der Gehäusetrennwand 100 ist eine Gehäusezwischenwand 101 vorgesehen, welche von der einen Gehäusestirnwand 1a bis zur anderen Gehäusestirnwand 1b verläuft. Auf der den Wandelementen 14, 15 abgewandten Seite der Gehäusezwischenwand 1 ist so der Diffusor 16 ausgebildet, während zwischen der Gehäusezwischenwand 101 und der Gehäusetrennwand 100 die Lufthauptkammer 111 ausgebildet ist. Die Anordnung ist dabei so vorgesehen, daß - in Hauptströmungsrichtung 13 des Luftstroms 6 gesehen - die Seitenränder 101a und 101b der Gehäusezwischenwand 101 mit Abstand z zu den Seitenwänden des Gehäuses 1 liegen, wodurch sich Luftdurchlässe vom Raum des Diffusors 16 zur Lufthauptkammer 111 ergeben. Die Seitenrändern 101a und 101b liegen - in Hauptströmungsrichtung 13 gesehen - deckungsgleich zu den voneinander abgewandten Schmalseiten der Wandelemente 14 und 15.

In der Lufthauptkammer sind zwei Klappen 108a und 108b angeordnet, die - in Hauptströmungsrichtung 13 gesehen - deckungsgleich und im wesentlichen parallel zu den Luftklappen 107 und 109 der Luftnebenkammer 110 und 112 liegen. Der Raum zwischen den Klappen 108a und 108b ist dabei über den Wärmetauscher 117 mit dem Diffusor 16 verbunden. Der Diffusor 16 ist über ein Einlaßgehäuse 106 mit dem Abluftkanal des Fahrgastraums verbunden, wobei das Einlaßgehäuse 106 über eine über die gesamte Breite des Gehäuses verlaufende Einlaßöffnung 3 in den Diffusor 16 mündet.

Die Klappen 107, 108a, 108b, 109 sind miteinander stellungsabhängig gekoppelt, wobei sie in ihren Endstellungen in zueinander etwa parallelen Ebenen liegen. Die Klappen 108a und 108b der Lufthauptkammer 111 verbinden dabei in einer ersten Stellung den Lufteinlaß 111a bzw. 111c (Fig. 8) unmittelbar mit dem Diffusor 16, so daß - wie in Fig. 7 gezeigt - in der ersten Stellung der Klappen der Teilluftstrom 6a durch das Wandelement 14 geführt und als getrockneter Luftstrom über den Anschlußstutzen 5 abgeführt wird. Der zweite Teilluftstrom 6b durchströmt als Desorptionsluftstrom zunächst den Wärmetauscher 117, wird dort aufgeheizt und nachfolgend über das zweite Wandelement 15 geführt, um die in dem Sorptionsmaterial gespeicherte Luftfeuchtigkeit auszutreiben. Der Desorptionsluftstrom 6b wird als Fortluftstrom über die Fortluftöffnung 20 abgeführt.

In der in Fig. 8 gezeigten Stellung der Luftklappen 107, 108a, 108b, 109 ist der Lufteinlaß 111a unmittelbar mit dem Diffusor 16 verbunden, so daß der Teilluftstrom 6a über das zweite Wandelemente 15 geführt ist und über den Anschlußstutzen 5 als trockener Luftstrom dem Fahrgastraum zugeführt werden kann. Der über den Wärmetauscher 117 in die Lufthauptkammer 111 eintretende Desorptionsluftstrom 6b tritt durch das erste Wandelement 14 und wird über den Luftauslaß 110b der zweiten Luftnebenkammer 110 und die Fortluftöffnung 20 im Gehäuse 1 abgeführt.

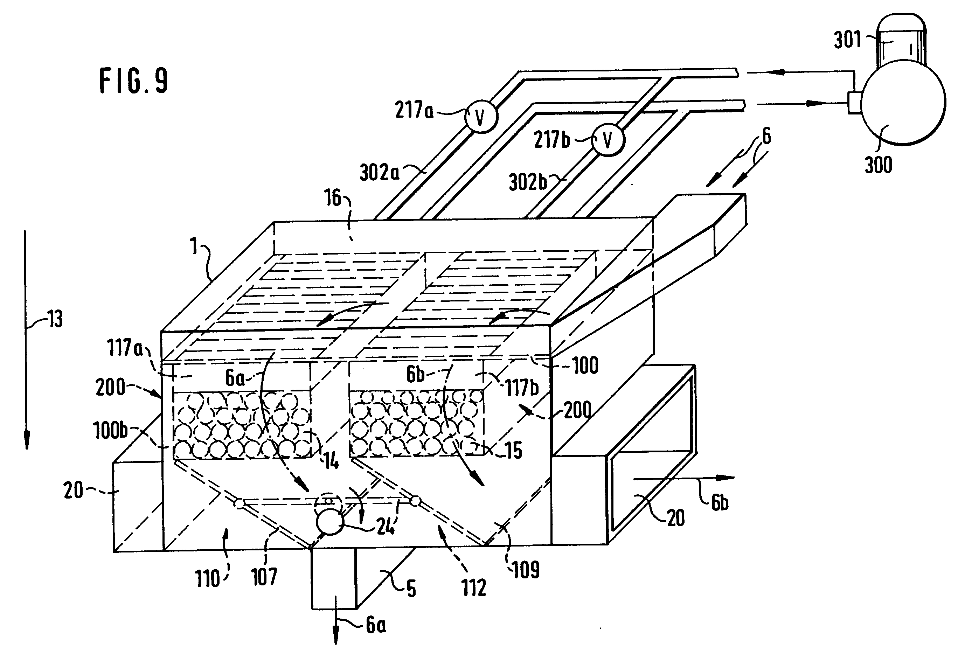

Im Ausführungsbeispiel nach Fig. 9, welches im Grundaufbau dem nach den Fig. 8 und 9 entspricht, weshalb für gleiche Teile gleiche Bezugszeichen verwendet sind, ist jedem Wandelement 14, 15 ein insbesondere in der Größe angepaßter Wärmetauscher 117a und 117b fest zugeordnet. In Hauptströmungsrichtung 13 gesehen haben die Wandelemente 14 und 15 und die Wärmetauscher 117a und 117b deckungsgleiche Ausbildungen. Ein Wandelement und ein Wärmetauscher bilden eine luftdurchströmte Baueinheit 200, wobei dem Wandelement 14 bzw. 15 ausschließlich über den Wärmetauscher 117a bzw. 117b ein Luftstrom zugeführt werden kann. Die Wärmetauscher bilden somit die einzige Strömungsverbindung zwischen dem Diffusor 16 und dem Wandelement 14 bzw. 15. Die Baueinheiten 200 liegen dabei etwa in einer Ebene, welche durch die Gehäusetrennwand 100 gebildet sein kann, die das Gehäuse 1 in den Diffusor 16 und den unteren Luftraum 100b aufteilt. Eine Lufthauptkammer entfällt.

Die Wärmetauscher 117a und 117b sind mit dem Kühlkreislauf 301 eines Motors, insbesondere eines Verbrennungsmotors 300 verbunden. In den Zuleitungen 302a bzw. 302b zu den Wärmetauschern sind Ventile 217a bzw. 217b angeordnet, welche als Zweistellungsventile ausgebildet sein können. Der Betrieb der Ventile ist derart, daß bei geöffnetem Ventil 217a das Ventil 217b geschlossen ist und umgekehrt. Der Öffnungsstellung der Ventile 217a und 217b ist eine entsprechende Stellung der Klappen 107 und 109 der Luftnebenkammern zugeordnet, wobei die Klappen über einen auch die Ventile schaltenden Stellungsmotor 24 betätigt sein können. In der in Fig. 9 gezeichneten Stellung ist das Ventil 217b offen, so daß der Wärmetauscher 117b betrieben ist. Das Ventil 217a ist geschlossen, so daß die Kühlwasserzuleitung 302b gesperrt ist. Diesen Ventilstellungen zugeordnet ist die gezeigte Stellung der Klappen 107, 109, so daß ein über den Wärmetauscher 117b geführter Teilluftstrom 6b aufgeheizt wird, um das Sorbens im Wandelement 14 zu desorbieren. Aufgrund der Stellung der Klappe 107 wird dieser Desorptionsluftstrom 6b durch die Fortluftöffnung 20 abgeführt. Der aus dem Diffusor 16 über den Wärmetauscher 117a dem Wandelement 15 zugeführte Teilluftstrom 6a wird nicht aufgeheizt, da dem Wärmetauscher 117a aufgrund des geschlossenen Ventils 217a keine Wärmeenergie zufließt. Dieser Teilluftsrom 6a strömt aufgrund der Stellung der Klappe 109 zum Anschlußstutzen 5, um als trockener Luftstrom dem Fahrgastraum zugeführt zu werden. Ist das Sorbens im Wandelement 14 erschöpft, werden die Ventile und Klappen entsprechend umgeschaltet.

## Patentansprüche

1. Vorrichtung zur Senkung der Luftfeuchtigkeit in einem Fahrgastraum eines Kraftfahrzeugs, insbesondere eines abwärmearmen Kraftfahrzeugs, mit einem Gehäuse (1), das mit einem Zuluftkanal und einem Abluftkanal des Fahrgastraums verbindbar ist, mit einer im Gehäuse (1) ausgebildeten Luftnebenkammer (12) und einer Lufthauptkammer (11), wobei die Luftnebenkammer (12) von der Lufthauptkammer (11) durch ein luftdurchströmtes Wandelement (14) aus feuchtigkeitsbindendem Material getrennt ist,
dadurch gekennzeichnet, daß eine zweite Luftnebenkammer (10) angeordnet ist, die von der Lufthauptkammer (11) durch ein zweites luftdurchströmtes Wandelement (15) aus feuchtigkeitsbindendem Material getrennt ist, daß zur Steuerung des Luftvolumenstroms in jeder Luftkammer (10, 11, 12) mindestens ein Luftstromsteuerelement (7, 8, 9) angeordnet ist, wobei in einer ersten Stellung der Luftstromsteuerelemente (7, 8, 9) ein erster über die erste Luftnebenkammer (12) und die Lufthauptkammer (11) geführter Luftstrom das erste Wandelement (14) durchströmt und als getrockneter Luftstrom (6a) dem Zuluftkanal des Fahrgastraums zugeführt ist und ein zweiter über die Lufthauptkammer (11) und die zweite Luftnebenkammer (10) geführter Luftstrom (6b) als Desorptionsluftstrom das zweite Wandelement (15) durchströmt und abgeführt ist und in einer zweiten Stellung der Luftstromsteuerelemente (7, 8, 9) die Luftführung entsprechend gewechselt ist.

2. Vorrichtung nach Anspruch 1,
dadurch gekennzeichnet, daß der erste Luftstrom (6a) in eine Luftnebenkammer (10, 12) eintritt und über die Lufthauptkammer (11) abströmt und der zweite Luftstrom (6b) in die Lufthauptkammer (11) eintritt und über eine Luftnebenkammer (10, 12) abströmt, wobei vorzugsweise in jeder Luftkammer (10, 11, 12) eine zum Wandelement (14, 15) etwa parallele Klappe (7, 8, 9) als Luftstromsteuerelement angeordnet ist und die Klappe in einer ersten Stellung und in einer zweiten Stellung etwa in einer diagonalen Ebene in der Kammer (10, 11, 12) liegt und in jeder Stellung in der Luftkammer (10, 11, 12) voneinander getrennte Strömungswege abgeteilt sind.

3. Vorrichtung nach Anspruch 2,
dadurch gekennzeichnet, daß jede Luftkammer (10, 11, 12) von einer Klappe (7, 8, 9) jeweils in einen Lufteinlaß (7a, 8a, 9a) und einen Luftauslaß (7b, 8b, 9b) aufteilbar ist, wobei das Wandelement (14, 15) jeweils zwischen einem Lufteinlaß und einem Luftauslaß liegt, wobei die Lufteinlässe (7a, 8a, 9a) vorzugsweise auf einer Stirnseite (2) des Gehäuses (1) liegend angeordnet sind und die Lufteinlässe (7a, 8a, 9a) insbesondere gemeinsam an den Abluftkanal angeschlossen sind, bevorzugt über einen Diffusor (16).

4. Vorrichtung nach einem der Ansprüche 1 bis 3,
dadurch gekennzeichnet, daß in einem Lufteinlaß (8a) zur Lufthauptkammer (11) eine Heizung (17) angeordnet ist, die vorzugsweise den gesamten Eintrittsquerschnitt des Lufteinlasses (8a) abdeckt.

5. Vorrichtung nach Anspruch 4,
dadurch gekennzeichnet, daß die Heizung (17) ein von der Abwärme eines Verbrennungsmotors oder den Abgasen eines Motors gespeister, insbesondere abschaltbarer Wärmetauscher (17b) ist.

6. Vorrichtung nach Anspruch 4,
dadurch gekennzeichnet, daß die Heizung (17) eine elektrische Widerstandsheizung (17a) aus insbesondere PCT-Elementen ist.

7. Vorrichtung nach einem der Ansprüche 1 bis 6,
dadurch gekennzeichnet, daß die Luftstromsteuerelemente miteinander stellungsabhängig gekoppelt sind und die Wandelemente (14, 15) vorzugsweise etwa längs der Hauptströmungsrichtung (13) des das Gehäuse (1) durchströmenden Luftstroms (6) ausgerichtet liegen, vorzugsweise etwa parallel und mit Abstand nebeneinander.

8. Vorrichtung nach Anspruch 1,
dadurch gekennzeichnet, daß die Wandelemente (14, 15) etwa in einer Ebene nebeneinander liegen und die Lufthauptkammer (111) auf der einen Seite der Ebene und die Luftnebenkammern (110, 112) auf der anderen Seite der Ebene liegen, wobei die Ebene vorzugsweise von einer Gehäusetrennwand (100) gebildet ist, die insbesondere die Wandelemente (14, 15) trägt.

9. Vorrichtung nach Anspruch 8,
daß in der Lufthauptkammer (111) zwei Klappen (108a, 108b) angeordnet sind, die den Lufteinlaß (111a, 111b, 111c) zum Wandelement (14, 15) für den ersten und zweiten Luftstrom (6a, 6b) öffnen bzw. sperren.

10. Vorrichtung nach Anspruch 8,
dadurch gekennzeichnet, daß jedem Wandelement (14, 15) eine Heizung (117a, 117b) zugeordnet ist, welche mit dem Wandelement (14, 15) vorzugsweise eine luftdurchströmte Baueinheit (200) bildet und insbesondere die Heizung (117a, 117b) abschaltbar ist.

11. Vorrichtung nach einem der Ansprüche 1 bis 10,
dadurch gekennzeichnet, daß das feuchtigkeitsbindende Material ein Sorbens wie Zeolith, Silicagel, Aluminiumhydroxyd oder dgl. ist.

12. Vorrichtung nach einem der Ansprüche 1 bis 11,
dadurch gekennzeichnet, daß das Wandelement (14, 15) aus einem luftdurchlässigen Käfig besteht, in den eine Schüttung aus Sorbensteilchen mit einer Korngröße von durchschnittlich 3mm eingebracht ist, wobei vorzugsweise jedes Wandelement etwa parallel zur Schwerkraft ausgerichtet liegt und die der Schwerkraft gegenüberliegende Schmalseite an eine Schüttungsmaterial enthaltende Vorratskammer (30) angeschlossen ist und insbesondere beide Wandelemente (14, 15) an eine gemeinsame Vorratskammer angeschlossen sind.

## Claims

1. Apparatus for reducing the humidity in a passenger compartment of a motor vehicle, especially of a motor vehicle without much waste heat, having a housing (1) that can communicate with an incoming air channel and an outgoing air channel of the passenger compartment, and having a subsidiary air chamber (12) formed in the housing (1) and a main air chamber (11), the subsidiary air chamber (12) being separated from the main air chamber (11) by a wall element (14) that is made of moisture-binding material and through which air flows,
characterised in that there is provided a second subsidiary air chamber (10) that is separated from the main air chamber (11) by a second wall element (15) that is made of moisture-binding material and through which air flows, and in that there is provided at least one air current control element (7, 8, 9) for controlling the air current volume in each air chamber (10, 11, 12), wherein in a first position of the air current control elements (7, 8, 9) a first air current guided via the first subsidiary air chamber (12) and the main air chamber (11) flows through the first wall element (14) and is conveyed as a current of dried air (6a) to the incoming air channel of the passenger compartment, and a second air current (6b) guided via the main air chamber (11) and the second subsidiary air chamber (10) flows as a current of desorption air through the second wall element (15) and is conveyed away, and in a second position of the air current control elements (7, 8, 9) the manner in which the air is guided is changed correspondingly.

2. Apparatus according to claim 1, characterised in that the first air current (6a) enters a subsidiary air chamber (10, 12) and flows away via the main air chamber (11), and the second air current (6b) enters the main air chamber (11) and flows away via a subsidiary air chamber (10, 12), wherein a flap (7, 8, 9) that is approximately parallel to the wall element (14, 15) is preferably arranged in each air chamber (10, 11, 12) as the air current control element, and in a first position and in a second position the flap lies approximately in a diagonal plane inside the chamber (10, 11, 12), and in each position flow paths that are separate from one another are partitioned off in the air chamber (10, 11, 12).

3. Apparatus according to claim 2, characterised in that each air chamber (10, 11, 12) can be divided by means of a flap (7, 8, 9) into an air inlet (7a, 8a, 9a) and an air outlet (7b, 8b, 9b), each wall element (14, 15) being located between an air inlet and an air outlet, the air inlets (7a, 8a, 9a) preferably being arranged to lie at an end face (2) of the housing (1), and the air inlets (7a, 8a, 9a) especially together being connected to the outgoing air channel, preferably via a diffusor (16).

4. Apparatus according to any one of claims 1 to 3, characterised in that there is arranged in an air inlet (8a) to the main air chamber (11) a heating means (17), which preferably covers the entire inlet cross-section of the air inlet (8a).

5. Apparatus according to claim 4, characterised in that the heating means (17) is a heat exchanger (17b) fed by the waste heat of a combustion engine or the exhaust gases of an engine, especially a heat exchanger that can be switched off.

6. Apparatus according to claim 4, characterised in that the heating means (17) is an electric resistance heating means (17a) of, especially, PTC elements.

7. Apparatus according to any one of claims 1 to 6, characterised in that the air current control elements are coupled together in a position-dependent manner, and the wall elements (14, 15) preferably extend approximately along the main direction of flow (13) of the air current (6) flowing through the housing (1), preferably approximately parallel to and at a distance from each other.

8. Apparatus according to claim 1, characterised in that the wall elements (14, 15) are located approximately in a plane next to each other, and the main air chamber (111) is located on one side of the plane and the subsidiary air chambers (110, 112) are located on the other side of the plane, the plane preferably being formed by a housing dividing wall (100) that especially carries the wall elements (14, 15).

9. Apparatus according to claim 8, characterised in that two flaps (108a, 108b) are arranged in the main air chamber (111), which flaps open and close the air inlet (111a, 111b, 111c) to the wall element (14, 15) for the first and second air currents (6a, 6b).

10. Apparatus according to claim 8, characterised in that a heating means (117a, 117b) is associated with each wall element (14, 15), which heating means, together with the wall element (14, 15), preferably forms a structural unit (200) through which air flows, and the heating means (117a, 117b) can especially be switched off.

11. Apparatus according to any one of claims 1 to 10, characterised in that the moisture-binding material is a sorbent, such as zeolite, silica gel, aluminium hydroxide or the like.

12. Apparatus according to any one of claims 1 to 11, characterised in that the wall element (14, 15) consists of an air-permeable cage into which a filling material of sorbent particles having an average particle size of 3 mm has been introduced, each wall element preferably extending approximately parallel to gravitational force and the narrow side opposing gravitational force being connected to a storage chamber (30) containing filling material and, especially, the two wall elements (14, 15) being connected to a common storage chamber.

## Revendications

1. Dispositif pour réduire l'humidité de l'air dans l'habitacle d'un véhicule automobile, en particulier d'un véhicule automobile dégageant peu de chaleur perdue, comprenant un boîtier (1) pouvant être relié à un canal d'entrée d'air et un canal de sortie d'air de l'habitacle, ainsi qu'une chambre d'air annexe (12) et une chambre d'air principale (11) formées dans le boîtier (1), la chambre d'air annexe (12) étant séparée de la chambre d'air principale (11) par un élément de paroi (14) traversé d'air et fait d'un matériau liant l'humidité,
caractérisé en ce qu'une seconde chambre d'air annexe (10) est prévue, laquelle est séparée de la chambre d'air principale (11) par un second élément de paroi (15) traversé d'air et fait d'un matériau liant l'humidité, qu'au moins un élément de commande de courant d'air (7, 8, 9) est prévu pour commander le courant volumique d'air dans chaque chambre d'air (10, 11, 12), l'agencement étant tel que, dans une première position des éléments de commande de courants d'air (7, 8, 9), un premier courant d'air, guidé à travers la première chambre d'air annexe (12) et la chambre d'air principale (11), traverse le premier élément de paroi (14) et est amené en tant que courant d'air séché (6a) au canal d'entrée d'air de l'habitacle, et un second courant d'air (6b), guidé à travers la chambre d'air principale (11) et la seconde chambre d'air annexe (12), s'écoule en tant que courant d'air de désorption à travers le second élément de paroi (15) et est ensuite évacué, et que, dans une seconde position des éléments de commande de courants d'air (7, 8, 9), le guidage de l'air est changé en conséquence.

2. Dispositif selon la revendication 1, caractérisé en ce que le premier courant d'air (6a) pénètre dans une chambre d'air annexe (10, 12) et s'écoule à travers la chambre d'air principale (11), et le second courant d'air (6b) pénètre dans la chambre d'air principale (11) et s'écoule à travers une chambre d'air annexe (10, 12), un volet (7, 8, 9), disposé à peu près parallèlement à l'élément de paroi (14, 15) comme élément de commande de courant d'air, étant agencé de préférence dans chaque chambre d'air (10, 11, 12), ce volet étant situé à peu près dans un plan diagonal à l'intérieur de la chambre (10, 11, 12) dans une première et dans une seconde position et partageant, à l'intérieur de la chambre d'air (10, 11, 12), dans chaque position, des trajets d'écoulement séparés l'un de l'autre.

3. Dispositif selon la revendication 2, caractérisé en ce que chaque chambre d'air (10, 11, 12) peut être partagée par un clapet (7, 8, 9) en une admission d'air (7a, 8a, 9a) et une sortie d'air (7b, 8b, 9b), l'élément de paroi (14, 15) étant situé chaque fois entre une admission d'air et une sortie d'air, les admissions d'air (7a, 8a, 9a) étant agencées de préférence adjacentes à une race d'extrémité (2) du boîtier (1) et raccordées en particulier, collectivement, au canal de sortie d'air de l'habitacle, de préférence à travers un diffuseur (16).

4. Dispositif selon une des revendications 1 à 3, caractérisé en ce qu'un dispositif de chauffage (17) est placé dans une admission d'air (8a) menant à la chambre d'air principale (11), dispositif de chauffage qui recouvre de préférence toute la section d'entrée de cette admission d'air (8a).

5. Dispositif selon la revendication 4, caractérisé en ce que le dispositif de chauffage (17) est un échangeur de chaleur (17b) alimenté par la chaleur perdue d'un moteur à combustion interne ou par les gaz d'échappement d'un moteur, l'échangeur de chaleur étant en particulier agencé pour pouvoir être mis hors circuit.

6. Dispositif selon la revendication 4, caractérisé en ce que le dispositif de chauffage (17) est un dispositif de chauffage électrique par résistance (17a) qui est composé en particulier d'éléments à coefficient de température positif.

7. Dispositif selon une des revendications 1 à 6, caractérisé en ce que les éléments de commande de courants d'air sont couplés mutuellement pour leur positionnement et les élements de paroi (14, 15) sont orientés de préférence à peu près dans la direction principale d'écoulement (13) du courant d'air (6) traversant le boîtier (1), de préférence à peu près parallèlement et à distance l'un de l'autre.

8. Dispositif selon la revendication 1, caractérisé en ce que les éléments de paroi (14, 15) sont disposés l'un à côté de l'autre, à peu près dans un plan, et la chambre d'air principale (111) est placée d'un côté de ce plan et les chambres d'air annexes (110, 112) de l'autre côté de ce plan, lequel est formé de préférence par une cloison (100) du boîtier, cloison qui porte en particulier les éléments de paroi (14, 15).

9. Dispositif selon la revendication 8, caractérisé en ce que deux volets (108a, 108b) sont installés dans la chambre d'air principale (111), volets qui ouvrent ou ferment respectivement l'admission d'air (111a, 111b, 111c) menant à l'élément de paroi (14, 15) pour le premier et le second courant d'air (6a, 6b).

10. Dispositif selon la revendication 8, caractérisé en ce qu'un dispositif de chauffage (117a, 117b) est coordonné à chaque élement de paroi (14, 15) et forme de préférence, avec cet élément de paroi (14, 15), un ensemble (200) traversé d'air, le dispositif de chauffage (117a, 117b) étant en particulier agencé pour pouvoir être arrêté.

11. Dispositif selon une des revendications 1 à 10, caractérisé en ce que le matériau liant l'humidité est un agent de sorption tel qu'une zéolite, du gel de silice, l'hydroxide d'aluminium ou analogue.

12. Dispositif selon une des revendications 1 à 11, caractérisé en ce que l'élément de paroi (14, 15) est formé d'une cage perméable à l'air dans laquelle est mis en place un matériau grenu se laissant déverser, sous la forme de particules d'agent de sorption d'une grosseur de grain de 3 mm en moyenne, chaque élément de paroi étant de préférence orienté à peu près parallèlement à la direction de la gravité et le petit côté de l'élément de paroi situé en haut, par rapport à la direction de la gravité, étant raccordé à une chambre-réservoir (31) contenant du matériau grenu, les deux éléments de paroi (14, 15) étant raccordés de préférence à une chambre-réservoir commune.
